Europäisches Patentamt

European Patent Office

Office européen des brevets

(19)

(11) **EP 1 502 099 B1**

(12) **EUROPÄISCHE PATENTSCHRIFT**

(45) Veröffentlichungstag und Bekanntmachung des Hinweises auf die Patenterteilung:
**07.09.2005 Patentblatt 2005/36**

(21) Anmeldenummer: 03763844.2

(22) Anmeldetag: **14.07.2003**

(51) Int Cl.[7]: **G01N 23/20**

(86) Internationale Anmeldenummer:
**PCT/EP2003/007606**

(87) Internationale Veröffentlichungsnummer:
**WO 2004/008127 (22.01.2004 Gazette 2004/04)**

(54) **VORRICHTUNG UND VERFAHREN ZUR ERZEUGUNG EINER DEFINIERTEN UMGEBUNG FÜR PARTIKELFÖRMIGE PROBEN**

DEVICE AND METHOD FOR GENERATION OF A DEFINED ENVIRONMENT FOR PARTICULATE SAMPLES

DISPOSITIF ET PROCEDE PERMETTANT DE PRODUIRE UN ENVIRONNEMENT DEFINI POUR DES ECHANTILLONS SOUS FORME DE PARTICULES

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **16.07.2002 DE 10232172**

(43) Veröffentlichungstag der Anmeldung:
**02.02.2005 Patentblatt 2005/05**

(73) Patentinhaber: **Proteros Biostructures GmbH**
**82152 Martinsried (DE)**

(72) Erfinder:
• **NEUEFEIND, Torsten**
**82131 Gauting (DE)**
• **KIEFERSAUER, Reiner**
**80634 München (DE)**
• **VENZKE, Holger**
**90408 Nürnberg (DE)**
• **STILL, Martin**
**90429 Nürnberg (DE)**

(74) Vertreter: **Schoppe, Fritz et al**
**Patentanwälte**
**Schoppe, Zimmermann, Stöckeler & Zinkler**
**Postfach 246**
**82043 Pullach bei München (DE)**

(56) Entgegenhaltungen:
**WO-A-00/23795          US-B1- 6 355 217**

• **KIEFERSAUER R ET AL: "PROTEIN-CRYSTAL DENSITY BY VOLUME MEASUREMENT AND AMINO-ACID ANALYSIS" JOURNAL OF APPLIED CRYSTALLOGRAPHY, COPENHAGEN, DK, Bd. 29, Nr. 4, 1996, Seiten 311-317, XP000866399 ISSN: 0021-8898 in der Anmeldung erwähnt**
• **KIEFERSAUER R ET AL: "A NOVEL FREE-MOUNTING SYSTEM FOR PROTEIN CRYSTALS: TRANSFORMATION AND IMPROVEMENT OF DIFFRACTION POWER BY ACCURATELY CONTROLLED HUMIDITY CHANGES" JOURNAL OF APPLIED CRYSTALLOGRAPHY, COPENHAGEN, DK, Bd. 33, 2000, Seiten 1223-1230, XP009021980 ISSN: 0021-8898 in der Anmeldung erwähnt**

**Beschreibung**

Die vorliegende Erfindung bezieht sich auf Vorrichtungen und Verfahren zur Erzeugung einer definierten Umgebung für partikelförmige Proben und insbesondere für partikelförmige Proben, die in einer Umgebung definierter Feuchte gehalten werden müssen, wie z. B. Proteinkristallen.

Die Proteinkristallographie ist ein Verfahren zur Strukturanalyse von Proteinen, bei dem diese in einem kristallisiertem Zustand einer Röntgen- oder Synchrotronbestrahlung ausgesetzt werden, um aus Beugungsbildern die Molekülstruktur aufzuklären. Durch die Anlagerung unregelmäßig geformter Proteine in einem Proteinkristall entstehen Kanäle, welche mit Kristallisationslösung gefüllt sind. Proteinkristalle sind durch den hohen Solvenzgehalt sowie durch die im Vergleich zu Kristallen von Kleinmolekülen schwachen Kontakte sehr empfindlich und nur in einer speziellen Umgebung stabil.

Um eine solche stabile Umgebung zu gewährleisten, wurden früher Proteinkristalle mit etwas Mutterlauge, d. h. der Lösung, in der der Kristall gewachsen ist, in eine Glaskapillare montiert, die dann an beiden Enden verschlossen wird. Dabei stellt sich in der Kapillare eine Atmosphäre ein, in der der Kristall haltbar ist. Diese Vorgehensweise ist jedoch nachteilhaft, da es sich um ein geschlossenes System handelt, so daß Manipulationen am Kristall nicht mehr möglich sind. Ferner ist es bekannt, Proteinkristalle in einem sogenannten Loop, der eine Schlaufenhalterung darstellt, einem Schockgefrieren zu unterziehen und bei tiefen Temperaturen zu messen. Abgesehen von einem Temperaturannealing ist auch hier der Kristall nicht mehr manipulierbar.

In neuerer Zeit wurden Systeme bekannt, bei denen Proteinkristalle in einem feuchten Luftstrom stabil gehalten werden, wobei durch die Einstellung der Feuchte des Luftstroms die relative Feuchte am Kristall bei einer gleichzeitigen Analyse des Kristallzustands an einer Röntgenkamera kontrolliert werden kann.

Derartige Systeme sind beispielsweise bei Reiner Kiefersauer u.a., "Free-mounting system for protein crystals: transformation and improvement of diffraction power by accurately control humidity changes", J. Appl. Cryst. (2000), 33, S. 1.223 - 1.230, und der EP-A-0987543 bekannt. Diese bekannten Systeme umfassen einen Meßkopf, der sowohl eine Halterung für einen zu untersuchenden Proteinkristall als auch einen Gaskanal zum Zuführen eines feuchten Luftstroms zu dem Proteinkristall umfaßt. Die Feuchte des Luftstroms wird bei diesen bekannten Systemen unter Verwendung eines Feuchteregelungssystems eingestellt, um abhängig von der mittels eines Feuchtesensors erfaßten Feuchte das Mischverhältnis eines trockenen Luftstroms und eines nassen Luftstroms einzustellen, um somit die Feuchte des Luftstroms zu regeln.

Ein gleichartiges Verfahren zur Einstellung der Feuchte ist auch bei R. Kiefersauer u. a., "Protein-Crystal Density by Volume Measurement and Amino-Acid Analysis", J. Appl. Cryst. (1996), 29, S. 311 - 317, bekannt. Bei T. Sjögren u.a., "Protein crystallography in a vapour stream: data collection, reaction initiation and intermediate trapping in naked hydrated protein crystals", J. Appl. Cryst. (2002) 35, S. 113 - 116, ist ebenfalls ein System zur Proteinkristallographie in einem feuchten Luftstrom beschrieben. Bei diesem bekannten System wird eine Blasensäule (Bubbler) verwendet, um das Gas mit einer gewünschten Feuchtigkeit zu beaufschlagen. Dabei läßt man das Gas durch eine Flüssigkeit aufsteigen, wobei die Feuchtigkeit des Gases durch ein Ändern der Temperatur der Flüssigkeit oder durch ein Verändern der Zusammensetzung derselben manipuliert werden kann. Das Gas mit der so eingestellten Feuchtigkeit wird über ein Puffergefäß einer Düse zugeführt, an deren Auslaßende an einer Halterung ein Kristall angeordnet ist, so daß ein laminarer Gasfluß auf den Kristall trifft.

Die bekannten Systeme zum Einstellen der Feuchte eines Gasstroms sind nachteilig dahingehend, daß mit denselben eine exakte Einstellung der Feuchte, insbesondere in einem interessierenden Bereich knapp unterhalb von 100% relativer Feuchte, schwierig realisierbar ist. Bei den erstgenannten Verfahren unter Verwendung eines Feuchtesensors ist aufgrund der räumlichen Enge am Kristall der Einsatz des Sensors zur Messung der relativen Feuchte direkt am Meßort zur Regelung einer Befeuchtungseinrichtung nicht möglich. Darüber hinaus weisen am Markt erhältliche Relativ-FeuchteSensoren keine ausreichende Genauigkeit und Langzeitstabilität im benötigten Feuchtebereich auf.

Die Aufgabe der vorliegenden Erfindung besteht darin, Vorrichtungen und Verfahren zur Erzeugung einer definierten Umgebung für partikelförmige Proben zu schaffen, die eine hochgenaue und langzeitstabile Feuchtekonditionierung am Ort einer partikelförmigen Probe ermöglichen.

Diese Aufgabe wird durch eine Vorrichtung gemäß Anspruch 1 und ein Verfahren gemäß Anspruch 13 gelöst.

Die vorliegende Erfindung schafft eine Vorrichtung zur Erzeugung einer definierten Umgebung für partikelförmige Proben mit folgenden Merkmalen:

einem Halteelement mit einem Auflageende für eine partikelförmige Probe;

einer Vorrichtung zum Erzeugen eines feuchten Gasstroms an einem Mündungsende derselben, wobei das Mündungsende auf das Auflageende gerichtet ist,

wobei die Vorrichtung zum Erzeugen des feuchten Gasstroms folgende Merkmale aufweist:

eine Einrichtung zum Bereitstellen eines Gases, das eine erste Temperatur und eine erste relative Feuchte aufweist, so daß das Gas eine erste Taupunkttemperatur besitzt;

einen Kühler zum Abkühlen des Gases auf eine Kühlertemperatur unter Kondensation von Feuchtigkeit, um eine zweite Taupunkttemperatur des Gases, die der Kühlertemperatur entspricht, einzustellen;

eine Einrichtung zum Leiten des Gases mit der zweiten Taupunkttemperatur zu dem Mündungsende unter Verhinderung einer Kondensation von Feuchtigkeit aus dem Gas; und

eine Einrichtung zum Einstellen der Kühlertemperatur und der Temperatur des Gases an dem Mündungsende zum Einstellen der relativen Feuchte des Gases an dem Mündungsende.

Die vorliegende Erfindung schafft ferner ein Verfahren zur Erzeugung einer definierten Umgebung für partikelförmige Proben mit folgenden Schritten:

Halten einer partikelförmigen Probe an einem Auflageende eines Halteelements;
Erzeugen eines feuchten Gasstroms an einem Mündungsende, das auf das Auflageende gerichtet ist, mit folgenden Teilschritten:

Bereitstellen eines Gases, das eine erste Temperatur und eine erste relative Feuchte aufweist, so daß das Gas eine erste Taupunkttemperatur besitzt;

Abkühlen des Gases auf eine Kühlertemperatur unter Kondensation von Feuchtigkeit, um eine zweite Taupunkttemperatur des Gases, die der Kühlertemperatur entspricht, einzustellen;

Leiten des Gases mit der zweiten Taupunkttemperatur zu dem Mündungsende, wobei verhindert wird, daß Feuchtigkeit aus dem Gas kondensiert; und

Einstellen der Kühlertemperatur und der Temperatur des Gases an dem Mündungsende zum Einstellen der relativen Feuchte des Gases an dem Mündungsende.

Erfindungsgemäß wird, um eine hohe benötigte Genauigkeit der Feuchtewerte eines Testgases, typischerweise Luft, am Ort einer partikelförmigen Probe zu erreichen, auf eine Regelung der Feuchte mittels eines Regelkreises aus Befeuchtung und Feuchtesensor verzichtet. Stattdessen erfolgt die Einstellung der Feuchte erfindungsgemäß über die Vorgabe der Taupunkttemperatur ohne aktive Feuchtemessung. Dabei wird erfindungsgemäß zur Feuchteeinstellung des Taupunkts eine zweistufige Konditionierung eingesetzt, die unter Verwendung einer Befeuchtungseinheit und einer Kondensationseinheit in der Form eines Rückkühlers erfolgt. In der Befeuchtungseinheit wird das Testgas mit einer zu hohen Feuchtigkeit versehen, indem sowohl Taupunkt als auch Temperatur des Testgases auf einen Wert oberhalb des gewünschten Werts eingestellt werden. Danach wird das Gas in dem Rückkühler wieder abgekühlt, wobei überschüssiges Wasser im Gas wieder kondensiert. Somit legt die Rückkühlertemperatur, auf die das Gas abgekühlt wird, den gewünschten Gastaupunkt fest. Die Taupunkttemperatur entspricht der Gastemperatur, bei der gerade 100% relative Feuchte im Gas vorliegen, d. h. das Gas ist vollständig gesättigt, selbst minimale zusätzliche Wassermengen können nicht mehr vom Gas aufgenommen werden. Dieser Zustand wird durch die kontrollierte Kondensation erzielt.
Das so konditionierte Testgas, typischerweise Luft, wird zum Meßkopf geführt und nimmt im dortigen Wärmetauscher die gewünschte Gastemperatur an. Um während des Führens des konditionierten Testgases zum Meßkopf eine Kondensation von Feuchtigkeit aus demselben zu verhindern, werden in der Regel beheizte Leitungen, die das Testgas oberhalb der Kühlertemperatur halten, verwendet. Die Temperatur des Gases an dem Mündungsende wird gesteuert, so daß sich der Feuchtegehalt des Meßgases, ausgedrückt in relativer Feuchte, eindeutig durch Berechnung aus den Größen "Taupunkttemperatur" und "Gastemperatur am Mündungsende" ergibt. Änderungen des Feuchtegehalts können nun eingestellt werden, indem entweder die Taupunkttemperatur, d. h. die Kühlertemperatur, oder die Gastemperatur am Mündungsende entsprechend eingestellt werden.
Der Zusammenhang zwischen relativer Feuchte $f_{rel}$, Taupunkttemperatur $T_{dp}$ und Gastemperatur Tg ist dabei durch die sogenannte Magnus-Formel gegeben. Diese lautet:

$$F_{rel} = \exp\left\{a_w b_w \left[\frac{T_{dp} - T_g}{(b_w + T_{dp})(b_w + T_g)}\right]\right\} \times 100\%$$

mit den Konstanten $a_w$ = 17,50 und $b_w$ = 241,2 K.

Die Einstellung der Testgastemperatur am Mündungsende erfolgt dabei vorzugsweise durch das Einstellen der Temperatur eines Meßkopfes, durch den das Testgas geleitet wird und der das Mündungsende aufweist. Die Temperatur des Meßkopfes kann mittels beliebiger bekannter Einrichtungen eingestellt werden, beispielsweise unter Verwendung von Heizwicklungen, unter Verwendung von Peltier-Elementen oder unter Verwendung eines Flüssigkeitswärmetauschers. Neben einer Erwärmung des Testgases im Meßkopf ist durch den Einsatz von Kühlaggregaten damit auch eine Abkühlung möglich, so daß ein weiterer Temperaturbereich des Testgases eingestellt werden kann. Durch eine Abkühlung ist es abhängig von der Außentemperatur auch möglich, sehr hohe Feuchten einzustellen.

Erfindungsgemäß wird vorzugsweise die Temperatur am Probenkopf und somit die Gastemperatur auf einen konstanten Wert gesteuert bzw. geregelt, während die Taupunkttemperatur, d.h. die Rückkühlertemperatur, entsprechend der gewünschten Feuchte variiert wird. Alternativ kann die Taupunkttemperatur konstant gehalten werden und die Temperatur des Probenkopfs entsprechend der gewünschten Feuchte variiert werden.

Um die Genauigkeit der Einstellung der relativen Feuchte am Mündungsende und somit an der partikelförmigen Probe, die vorzugsweise unmittelbar an dem Mündungsende angeordnet ist, zu erhöhen, umfassen bevorzugte Ausführungsbeispiele der vorliegenden Erfindung eine Einrichtung, um den durchflußabhängigen Druckverlust in der Gasleitung zwischen dem Kühler und dem Mündungsende bei der Einstellung der relativen Feuchte, d. h. der Einstellung des Gastaupunktes oder der Einstellung der Gastemperatur am Mündungsende, zu kompensieren.

Bei weiteren Ausführungsbeispielen ermöglicht die erfindungsgemäße Vorrichtung ferner neben der Konditionierung von Temperatur und Feuchte des Testgases das Zumischen eines oder mehrerer zusätzlicher Fremdgase und/oder einer mit einem Verdampfer in einen gasförmigen Zustand überführten Flüssigkeit. Dabei weist die Vorrichtung entsprechende Massenflußregler auf, um alle Fluidströme, d. h. Meßgas, Fremdgase und/oder Flüssigkeit, zu dosieren, so daß aus der Verhältnisbildung der Massenströme eine Absenkung bzw. Anhebung des im Rückkühler eingestellten Taupunktes bzw. der Gastemperatur am Mündungsende berechnet werden kann.

Statt entsprechender Massenflussregler können auch andere Einrichtungen zum Erzeugen eines definierten Flusses bzw. Volumenstroms verwendet werden, beispielsweise Einrichtungen, die durch einen Schrittmotor angetriebene Pumpen beinhalten, um dadurch einen definierten Volumenstrom zu bewirken.

Bei den erfindungsgemäßen Vorrichtungen und Verfahren hängt die Genauigkeit der Feuchteeinstellung nicht von Feuchtesensoren ab, sondern nur von langzeitstabilen Temperatursensoren, die zur Einstellung Gastemperatur am Mündungsende sowie zur Einstellung der Kühlertemperatur verwendet werden, wobei diese Temperatursensoren nicht direkt mit dem Testgas in Kontakt kommen müssen. Somit treten erfindungsgemäß die Nachteile von Relativ-Feuchte-Sensoren nicht auf, die darin bestehen, daß bei solchen Sensoren eine Alterung des Sensormaterials die Kennlinie verschiebt, daß solche Sensoren eine schlechte Genauigkeit im Bereich von 90 % relativer Feuchte bis 100 % relativer Feuchte aufweisen, daß die genannte Alterung in diesem Bereich noch extremer ist, und daß Feuchtesensoren mit einer hinreichenden Genauigkeit extrem teuer sind. Überdies besitzen billigere Sensoren meist lediglich einen eingeschränkten Meßbereich. Taupunktfühler ermöglichen ferner nicht eine Taupunktkonstanz im Bereich von hundertstel Grad, während dies bei der Verwendung von Temperaturfühlern, wie sie erfindungsgemäß erfolgt, garantiert werden kann.

Weiterbildungen der vorliegenden Erfindung sind in den abhängigen Ansprüchen dargelegt.

Bevorzugte Ausführungsbeispiele der vorliegenden Erfindung werden nachfolgend Bezug nehmend auf die beiliegenden Zeichnungen näher erläutert. Es zeigen:

Fig. 1   eine schematische Darstellung eines Systems, bei dem eine erfindungsgemäße Vorrichtung verwendet werden kann;

Fig. 2   eine schematische Darstellung eines Ausführungsbeispiels einer erfindungsgemäßen Vorrichtung;

Fig. 3   eine schematische Darstellung eines alternativen Ausführungsbeispiels einer erfindungsgemäßen Vorrichtung; und

Fig. 4   eine schematische Darstellung eines weiteren alternativen Ausführungsbeispiels einer erfindungsgemäßen Vorrichtung.

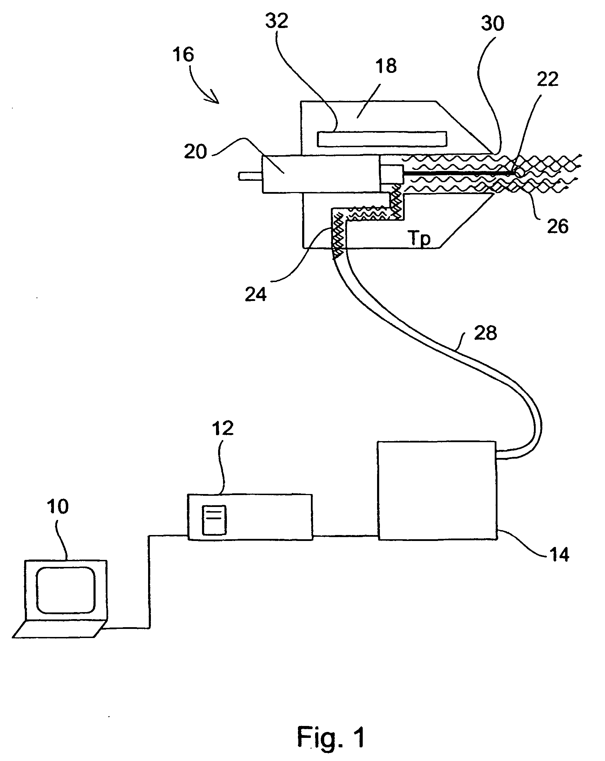

Fig. 1 zeigt ein System, bei dem die vorliegende Erfindung Anwendung finden kann, das einen Steuerrechner 10, eine Steuerelektronik 12, eine Befeuchtungseinheit 14 und einen Probenkopf 16 aufweist.

Der Probenkopf 16 kann ein herkömmlicher Probenkopf sein, wie er beispielsweise in der oben genannten EP-A-0987543 beschrieben ist. Dieser Probenkopf umfaßt ein Außenteil 18 und ein Innenteil 20, das vorzugsweise bezüglich des Außenteils 18 beweglich ist. An dem Innenteil 20 angebracht ist ein Halteelement 22 zum Halten einer partikelförmigen Probe, insbesondere eines Proteinkristalls. Die vorliegende Erfindung ist jedoch nicht auf die Verwendung für partikelförmige Proben in Form von Proteinkristallen beschränkt, sondern kann vorteilhaft für jegliche partikelförmige Proben verwendet werden, die einen hohen Flüssigkeitsgehalt aufweisen, d.h. in einer feuchten Umgebung gehalten werden müssen. Hierzu zählen biologische Objekte, wie z. B. biologische Zellen oder Zellbestandteile, oder auch synthetische nichtkristalline Objekte mit einem hohen Lösungsmittelgehalt.

In Fig. 1 ist das Halteelement 22 als eine Schlaufenhalterung dargestellt, das als Auflageende eine Schlaufe (Loop) besitzt, in die ein Proteinkristall eingesetzt werden kann. Derartige Schlaufenhalterungen sind aus der Proteinkristallographie insbesondere zum Schockgefrieren von Proben bekannt. Alternativ kann die Halterung eine mit Unterdruck betriebene Hohlkapillare (Vakuumpinzette) oder auch ein kompaktes, langgestrecktes, spitzenförmiges Bauteil aufweisen, an dessen Ende eine Auflage für die partikelförmige Materialprobe gegeben ist. Bei der erfindungsgemäßen Vorrichtung sind dabei jegliche Halterungsvorrichtungen anwendbar, bei der die partikelförmige Probe am Auflageende eines Halteelements unter Wirkung von Adsorptionskräften, elektrischen Kräften, einem Klebematerial oder dergleichen anhaften kann.

Wie in Fig. 1 gezeigt ist, umfaßt der Probenkopf 16 ferner einen Gaskanal 24, über den ein feuchter Luftstrom zu dem Auflageende des Halteelements 22 und somit der partikelförmigen Probe zugeführt werden kann. An den Gaskanal 24 angeschlossen ist eine Gasleitung 28, über die der Probenkopf 16 mit der Befeuchtungseinheit 14 verbunden ist. Der feuchte Gasstrom 26 wird dabei unter Druck von der Befeuchtungseinheit 14 über die Gasleitung 28 und den Gaskanal 24 zu einem Mündungsende 30 des Gaskanals 24 geleitet.

Das Auflageende des Halteelements 22 befindet sich vorzugsweise unmittelbar am Mündungsende 30, wobei jedoch eine bestimmte Beabstandung, beispielsweise in der Größenordnung von 1 bis 10 mm, vorzugsweise 2 bis 3 mm, in der Regel vorgesehen ist, um eine gleichzeitige Analyse des Kristallzustands unter Verwendung einer Röntgenkamera zu ermöglichen. Vorzugsweise ist der Gaskanal 24 und das Mündungsende 30 desselben ausgestaltet, um im Bereich des Auflageendes des Halteelements 22 einen im wesentlichen laminaren Gasstrom 26 zu gewährleisten. Zu diesem Zweck kann es vorteilhaft sein, den ohne Richtungsänderung direkt zu dem Mündungsende 30 führenden Gaskanal mit einer ausreichenden Länge zu versehen. Die Flußrate des feuchten Luftstroms 26 wird eingestellt, um die Erzeugung einer laminaren Strömung im Bereich des Auflageendes des Halteelements 22 zu unterstützen, wobei eine brauchbare Flußrate im Bereich von 0,6 bis 2,0 1/min liegen kann.

Der Probenkopf 16 weist ferner eine Temperiereinrichtung 32 auf, um die Temperatur $T_P$ desselben einzustellen. Der Gaskanal 24 durch den Probenkopf 16 ist derart ausgeführt, daß der feuchte Luftstrom die Temperatur Tp des Probenkopfs 16 annimmt, wenn es den Probenkopf durchströmt. Zu diesem Zweck kann der Gaskanal 24 einen entsprechenden Verlauf aufweisen oder kann beispielsweise auch als mehrere Teilkanäle ausgeführt sein. Zum Einstellen der Temperatur des Probenkopfs 16 ist ferner in bekannter Weise ein Temperatursensor (nicht gezeigt) an demselben vorgesehen.

Die Temperiereinrichtung 32 kann eine beliebige bekannte Einrichtung zum Einstellen der Temperatur sein. Bei bevorzugten Ausführungsbeispielen der vorliegenden Erfindung ist die Temperiereinrichtung 32 ein Flüssigkeitswärmetauscher zur Probenkopftemperierung, der sowohl ein Heizen als auch ein Kühlen des Probenkopfs 16 ermöglicht. Somit können auch Gastemperaturen unterhalb bzw. nahe der Raumtemperatur schnell eingestellt werden. Alternativ könnten herkömmliche Peltier-Elemente oder Heizelemente zur Einstellung der Probenkopftemperatur und somit des den Probenkopf durchströmenden feuchten Luftstroms verwendet werden. An dieser Stelle sei angemerkt, daß in Fig. 1 aus Gründen der Übersichtlichkeit als Verbindung des Probenkopfs mit dem Rest des Systems lediglich die Gasleitung 28 dargestellt ist, während weitere Verbindungen, beispielsweise elektrische Verbindungsleitungen, Leitungen zum Zuführen eines Temperierfluids, Leitungen zum Zuführen eines Vakuums für eine Haltekapillare und dergleichen, nicht gezeigt sind.

Die vorliegende Erfindung ist nicht auf einen Probenkopf, der kombiniert ein Halteelement und eine Gaszuführung aufweist, beschränkt. Vielmehr können ein Halteelement und separat davon eine Vorrichtung, die einen feuchten Gasstrom auf das Halteelement richtet, vorgesehen sein. Eine solche Vorrichtung kann beispielsweise eine längliche Düse einer ausreichenden Länge besitzen, um die Erzeugung eines laminaren Gasstroms zu unterstützen.

Bevor nachfolgend im einzelnen auf die erfindungsgemäß verwendete Befeuchtungseinheit 14 eingegangen wird, sei kurz darauf hingewiesen, daß sämtliche Programmierungen derselben zur Durchführung von Feuchtexperimenten und dergleichen über den Steuerrechner 10 und die Steuerelektronik 12 erfolgen kann. Bei dem dargestellten Aufbau dient die Steuerelektronik 12 dazu, die Befehle des Steuerrechners 10 der Befeuchtungseinheit 14 sowie dem Probenkopf 16 zuzuführen. Nachdem weder der Steuerrechner 10 noch die Steuerelektronik 12 Gegenstand der vorliegenden Erfindung sind, bedürfen dieselben hierin keiner weiteren Erläuterung.

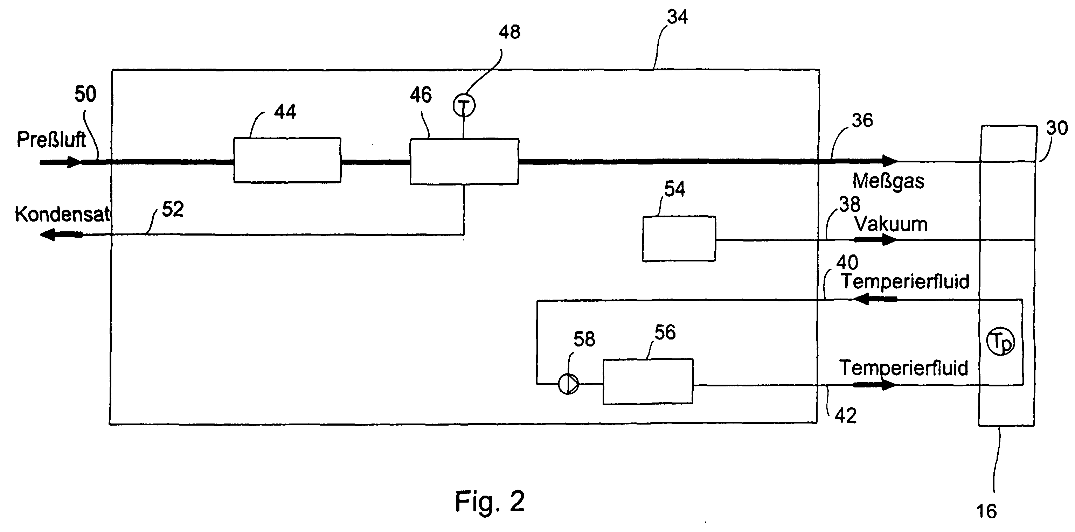

Im folgenden wird das in Fig. 2 schematisch dargestellte Ausführungsbeispiel einer erfindungsgemäßen Vorrichtung zur Erzeugung einer definierten Umgebung für partikelförmige Proben näher erläutert. Diese umfaßt ein Fluidmodul 34, das über eine Mehrzahl von Fluidleitungen 36, 38, 40 und 42 mit dem Probenkopf 16 verbunden ist. Ober die Fluidleitung 36 wird dem Probenkopf das Meßgas zugeführt und an dem Mündungsende 30 desselben bereitgestellt. Als Messgas wird dabei das Gas bezeichnet, das an den Ort der partikelförmigen Probe, d.h. im wesentlichen das Mündungsende, zugeführt wird, um die gewünschte relative Feuchte einzustellen. Wie oben erläutert wurde, nimmt das Meßgas die Temperatur $T_p$ des Probenkopfs 16 an.

Die Befeuchtungseinheit zum Erzeugen des durch die Fluidleitung 36 geführten feuchten Gasstroms umfaßt einen Befeuchter 44 und einen Rückkühler 46. Der Rückkühler 46 besitzt eine Temperatursteuereinrichtung 48 zum Einstellen der Kühlertemperatur des Rückkühlers 46. Der Eingang des Befeuchters 44 ist mit einer Preßluftleitung 50 verbunden, während der Ausgang desselben mit dem Eingang des Rückkühlers 46 verbunden ist. Der Ausgang des Rückkühlers 46 ist mit der Fluidleitung 36 verbunden. Der Rückkühler 46 besitzt ferner einen Ausgang, der mit einer Kondensatleitung 52 verbunden ist.

Die Fluidleitung 38 ist mit einer Vakuumpumpe 54 und ferner mit einer in dem Probenkopf 16 vorgesehenen Haltekapillare (nicht gezeigt) verbunden, um eine partikelförmige Probe am Auflageende der Haltekapillare zu halten.

Die beiden Fluidleitungen 40 und 42 stellen Leitungen zum Zuführen und Abführen eines Temperierfluids zum Einstellen der Temperatur des Probenkopfs 16 dar. Zu diesem Zweck sind diese Fluidleitungen in bekannter Form mit einer Temperierungssteuereinrichtung 56 und einer Pumpe 58 zum Liefern eines Temperierfluidflusses durch die Temperierfluidleitungen 40 und 42 verbunden.

Bei dem in Fig. 2 gezeigten Ausführungsbeispiel wird ein Gasstrom definierter Feuchte am Mündungsende 30 wie folgt erzeugt.

Abhängig von einer am Probenort gewünschten Feuchte und einer vorgegebenen Probenkopftemperatur $T_P$ wird unter Verwendung der oben genannten Magnus-Formel die für die gewünschte relative Feuchte $F_{rel}$ erforderliche Taupunkttemperatur $T_{dp}$ ermittelt. Diese Ermittlung kann in dem Steuerrechner 10 erfolgen.

Auf die ermittelte Taupunkttemperatur $T_{dp}$ wird die Kühlertemperatur eingestellt, um dadurch die gewünschte Feuchte am Ort der Probe einzustellen. Zum Erzeugen des Gasstroms mit der Taupunkttemperatur $T_{dp}$ wird zunächst dem Befeuchter 44 über die Leitung 50 Preßluft zugeführt, die in dem Befeuchter 44 mit einer zu hohen Feuchtigkeit beaufschlagt wird, d. h. einem Taupunkt und einer Temperatur oberhalb des gewünschten Wertes. Dieses zu feuchte Gas wird dem Rückkühler 46 zugeführt und auf die Kühlertemperatur $T_K$ abgekühlt. Dadurch wird überschüssiges Wasser in dem Gas kondensiert, so daß die Kühlertemperatur $T_K$ den gewünschten Gastaupunkt und damit die Taupunkttemperatur $T_{dp}$ des Messgases festlegt. Das dabei erzeugte Kondensat wird über die Leitung 52 abgeführt.

Das Meßgas mit der gewünschten Taupunkttemperatur $T_{dp}$ wird unter Druck über die Fluidleitung 36 auf die oben beschriebene Weise zu der Mündung 30 geleitet. Dabei muß sichergestellt sein, daß zwischen dem Rückkühler und dem Meßkopf 16 keine Kondensation stattfindet, so dass keine Verringerung der Taupunkttemperatur stattfinden kann. Zu diesem Zweck ist die Gasleitung 36 vorzugsweise durch eine beheizte Gasleitung, beispielsweise eine flexible beheizte Teflonleitung, gebildet. Ist sichergestellt, daß die Kühlertemperatur $T_K$ stets unter der Umgebungstemperatur, in der das System betrieben wird, liegt, ist das Vorsehen einer Heizung für die Fluidleitung 36 nicht erforderlich, da dann ohne Vorsehen einer Heizung sichergestellt ist, daß die Temperatur des Meßgases nach Verlassen des Rückkühlers nicht unter die Kühlertemperatur absinkt und somit eine Kondensation nicht stattfindet.

Dadurch, daß erfindungsgemäß das Meßgas ausgehend von einer höheren Temperatur und Feuchte unter Kondensation auf eine gewünschte Taupunkttemperatur $T_{dp}$ abgekühlt wird, ist die Taupunkttemperatur, d. h. die Temperatur, bei der die relative Feuchte bei einem gegebenen Druck 100% beträgt, exakt einstellbar. Nach dem Rückkühler ist jede weitere Kondensation von Feuchtigkeit aus dem Meßgas verhindert. Somit hängt die relative Feuchtigkeit am Mündungsende 30 und somit am Kristall entsprechend der oben angegebenen Magnus-Formel lediglich von der Taupunkttemperatur des Meßgases und der Temperatur des Meßgases am Mündungsende 30 ab. Bei dem gegebenen Ausführungsbeispiel wird der Probenkopf 16 unter Verwendung des Temperierfluids auf eine gegebene Temperatur $T_P$ geregelt, so daß die relative Feuchte des Meßgasstroms über eine Einstellung der Taupunkttemperatur des Meßgases geändert werden kann. Diese Taupunkttemperatur des Meßgases entspricht der Kühlertemperatur $T_K$, so daß durch Einstellen der Kühlertemperatur die relative Feuchte des Meßgases am Mündungsende 30 eingestellt werden kann.

Das beschriebene System erlaubt die Einstellung der relativen Feuchte am Mündungsende des Probenkopfes auf eine exakte Weise für den Fall, dass im Rückkühler und am Mündungsende identische Drücke vorherrschen. Da dies in der Praxis schwer realisierbar ist, ist bei bevorzugten Ausführungsbeispielen eine Korrektureinrichtung vorgesehen, um Druckdifferenzen zwischen dem Mündungsende und dem Rückkühler zu berücksichtigen.

Für eine solche Druckkorrektur wird die Dampfdruckkurve des Reinstoffsystems Wasser/Wasserdampf bzw. Eis/Wasserdampf verwendet. Diese Kurve p(T) gibt für jede Temperatur T den entsprechenden, sich über einer Wasserbzw. Eisoberfläche einstellenden Wasserdampfdruck p an. Für diese Kurve, die hochgenau vermessen ist und die in etwa exponentiell verläuft, gibt es Berechnungsgleichungen.

Ferner wird davon ausgegangen, dass im Gemisch feuchter Luft der Wasserdampfanteil thermodynamisch nahezu unabhängig von umgebenden Gasen betrachtet werden kann(ideales Gasgemisch), so daß die Dampfdruckkurve p(T) auch für den Wasserdampfteildruck e(T) im Gemisch gilt. Bei einer bestimmten Temperatur T des feuchten Gases kann also maximal der durch die Dampfdruckkurve angegebene Wasserdampfpartialdruck e(T) im Gemisch vorliegen.

Beim Rückkühlprinzip wird eine auf eine hohe Feuchte konditionierte Luft auf eine Temperatur $T_K$ abgekühlt und dabei überschüssige Feuchte auskondensiert. Es stellt sich der Wasserdampfpartialdruck $e(T_K)$ im Gas ein, wobei die Kühlertemperatur $T_K$ aufgrund des verwendeten Rückkühlprinzips der Taupunkttemperatur $T_{dp}$ entspricht.

In feuchter Luft gilt ferner das für ideale Gase aufgestellte Dalton'sche Gesetz, nachdem sich der Gesamtdruck eines Gemisches aus der Summe der Partialdrücke der Komponenten ergibt, d. h. bei feuchter Luft $p = p_{Luft} + e$. Ändert sich der Druck des Gasgemischs, so ändern sich alle Teildrücke anteilig. Dieser Effekt wird bei einer Korrektur zur Kompensation des durchflußabhängigen Druckverlusts in der Meßgasleitung 36 berücksichtigt.

Zum Durchführen der erfindungsgemäßen Druckkorrektur muß die Druckdifferenz zwischen dem Druck im Rückkühler und dem Druck am Mündungsende ermittelt werden. Als Druck am Mündungsende bzw. am Ort der Probe kann dabei vereinfachend ein typischer Umgebungsdruck $p_P$ von 980 mbar angenommen werden. Alternativ kann zu diesem Zweck ein Absolutdrucksensor am Probenkopf vorgesehen sein, um den exakten Umgebungsdruck zu erfassen. Ferner wird der im Rückkühler 46 vorliegende Druck $P_K$ mittels eines Drucksensors, vorzugsweise eines Differenzdrucksensors, erfaßt. Der aktuelle Druck im Rückkühler $p_K$ variiert je nach eingestelltem Gasdurchfluß und Temperatur.

Zur Durchführung der Druckkorrektur wird nun aus der gewünschten relativen Feuchte und der vorgegebenen Probenkopftemperatur über die obige Magnum-Formel die zugehörige Taupunkttemperatur $T_{dp}$ ermittelt. Aus dieser Taupunkttemperatur wird über die Dampfdruckkurve der zugehörige Wasserdampfpartialdruck $e_P$ berechnet. Dieser kann durch den Steuerrechner direkt berechnet werden oder durch einen Zugriff auf eine Nachschlagtabelle ermittelt werden.

Aus diesem ermittelten, am Probenkopf notwendigen Partialdruck $e_P$ wird entsprechend dem Verhältnis der Drücke im Rückkühler und am Ort der Probe (Umgebungsabsolutdruck) der im Rückkühler einzustellende Wasserdampfpartialdruck $e_K$ wie folgt ermittelt:

$$e_K = e_P \cdot \frac{P_K}{P_P}.$$

Über die Dampfdruckkurve kann dieser Wasserdampfpartialdruck $e_K$ wiederum in eine einzustellende Taupunkttemperatur am Rückkühler umgerechnet werden. Auf diese Taupunkttemperatur wird die Rückkühlertemperatur $T_K$ eingestellt, um am Ort der Probe die gewünschte Feuchte zu erhalten.

Somit kann selbst bei einem über die Meßgasleitung 36 auftretenden Druckabfall eine hochgenaue Einstellung der Feuchte am Mündungsende 30 erfolgen.

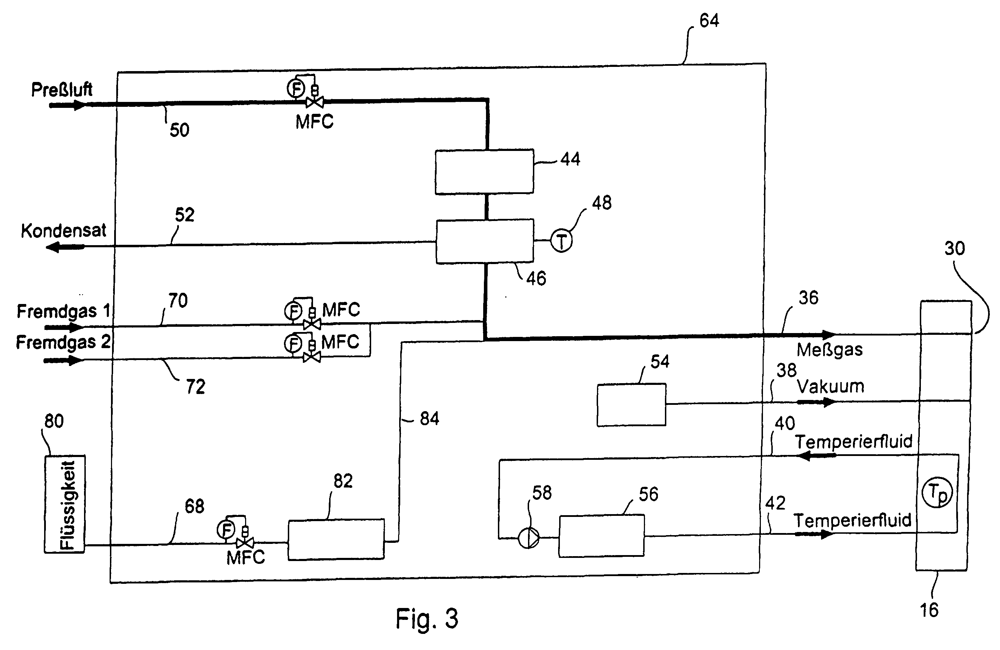

Bevorzugte Ausführungsbeispiele der vorliegenden Erfindung ermöglichen die Zugabe von Fremdgasen und/ oder Flüssigkeiten in den Meßgasstrom. Ein mit hierzu erforderlichen Einrichtungen versehenes modifiziertes Fluidmodul 64 ist in Fig. 3 gezeigt. Zu diesem Zweck sind Fremdgasleitungen 70 und 72 über jeweilige Massenflußregler MFC mit der Meßgasleitung 36 verbunden. Über diese Leitungen 70 und 72 können ein Fremdgas 1 und ein Fremdgas 2 in das Meßgas eingebracht werden.

Ferner ermöglicht das in Fig. 3 gezeigte System das Einbringen einer verdampften Flüssigkeit in das Meßgas. Eine Flüssigkeit 80 kann über eine Flüssigkeitsleitung 68, in der ein Massenflußregler MFC vorgesehen ist, einem Direktverdampfer 82 zugeführt werden, der über eine Gasleitung 84 mit der Meßgasleitung 36 verbunden ist. Der Direktverdampfer bewirkt eine rückstandsfreie Verdampfung der ihm zugeführten Flüssigkeit, so daß der Massenfluß der ihm zugeführten Flüssigkeit dem des ihn verlassenden Gases entspricht.

Da bei dem in Fig. 3 gezeigten System alle Fluidströme, sowohl das Meßgas als auch die Fremdgase 1 und 2 und die Flüssigkeit über Massenflußregler dosiert werden, kann aus der Verhältnisbildung der Massenströme eine Absenkung bzw. Anhebung des im Rückkühler eingestellten Taupunkts berechnet werden, so daß diese bei der Einstellung der Feuchte des Meßgases am Mündungsende 30 berücksichtigt werden können. Bei der zugeführten Flüssigkeit 80 kann es sich um eine wasserfreie Flüssigkeit, beispielsweise Isopropanol, handeln. Ist die Flüssigkeit nicht wasserfrei, muß dies bei der Einstellung der Feuchte ebenfalls berücksichtigt werden.

Die vorliegende Erfindung ermöglicht somit die beliebige Zudosierung von Fremdgasen oder Flüssigkeiten über einen internen Verdampfer zu dem Meßgas, wobei die Dosierung aller Fluide über die Massenflußregler MFC erfolgt, so daß die jeweilige Zudosierung bei der Einstellung der Feuchte durch eine entsprechende Absenkung bzw. Anhebung des im Rückkühler eingestellten Taupunkts berücksichtigt werden kann.

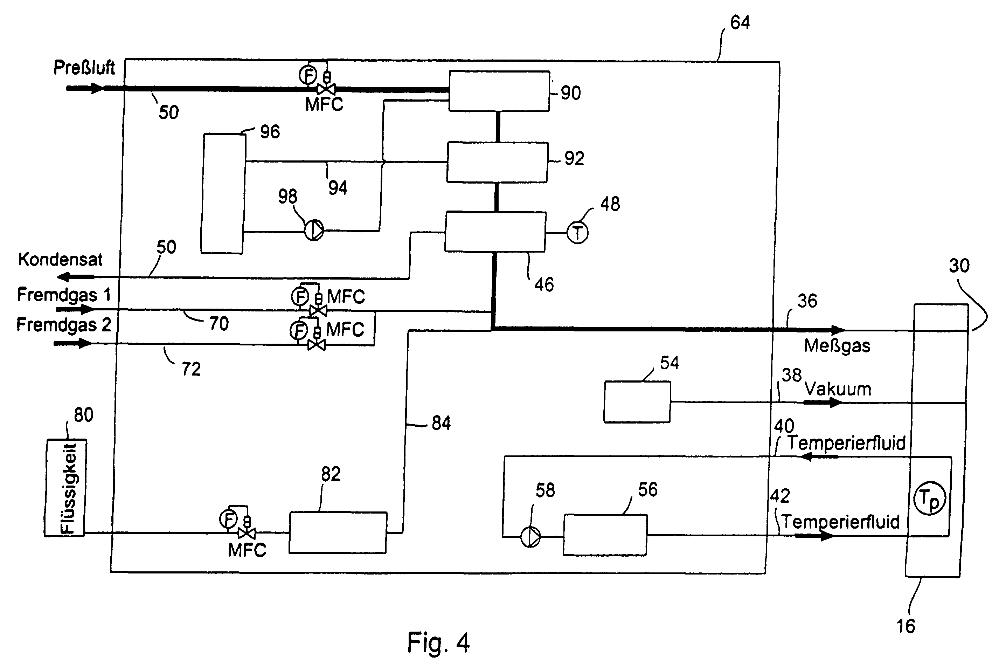

Der erfindungsgemäß verwendete Befeuchter zur Beaufschlagung des Gases mit einer erhöhten Feuchtigkeit und einer erhöhten Temperatur, bevor dasselbe einer Rückkühlung unterzogen wird, kann eine herkömmliche Blasensäule (Bubbler) sein. Eine erfindungsgemäß bevorzugte Ausgestaltung eines solchen Befeuchters ist jedoch in Fig. 4 gezeigt. Der Befeuchter ist dabei als ein Umlaufbefeuchter realisiert, der eine Befeuchtereinheit 90, die einen Eingang, der mit der Preßluftleitung 50 verbunden ist, und einen Ausgang, der mit einem Eingang eines Abscheiders 92 verbunden ist, aufweist. Der Ausgang des Abscheiders 92 ist mit dem Rückkühler 46 verbunden. Der Abscheider 92 ist über eine Leitung 94 ferner mit einem Wasservorrat 96 verbunden. Der Wasservorrat weist ferner einen Ausgang auf, der über eine Pumpe 98 mit einem weiteren Eingang der Befeuchtereinheit 90 verbunden ist. Bei dem in Fig. 4 gezeigten Befeuchter wird über die Pumpe 98 der Befeuchtereinheit 90 Wasser aus dem Wasservorrat 96 zugeführt, wobei das Meßgas, d. h. die Preßluft, in dem Befeuchter 90 mit dem Wasser befeuchtet wird. Flüssiges Wasser wird in dem Abscheider 92 abgeschieden und über die Leitung 94 zu dem Wasservorrat 96 zurückgeführt. Ein Umlaufbefeuchter, wie er in Fig. 4 gezeigt ist, ist gegenüber einer unhandlichen Blasensäule vorteilhaft, da er kompakter ausgeführt werden kann.

Die erfindungsgemäße Vorrichtung und das erfindungsgemäße Verfahren ermöglichen eine hochexakte Einstellung der Feuchte über einen großen Bereich und insbesondere eine hochexakte Einstellung der Feuchte in dem für eine Proteinkristallographie interessierenden Bereich knapp unterhalb von 100% relativer Feuchte, beispielsweise zwischen 80% und 100% relativer Feuchte. Dabei lassen sich erfindungsgemäß partikelförmige Proben bei beliebigen Temperaturen untersuchen, wobei lediglich die entsprechende Gastemperatur über die Probenkopftemperatur Tp entsprechend eingestellt werden muß. Abhängig von der Temperatur des Probenkopfs kann die Taupunkttemperatur durch ein entsprechendes Regeln der Temperatur des Rückkühlers eingestellt werden, um eine gewünschte Feuchte zu erhalten. Vorteilhaft können hierzu Peltier-Elemente verwendet werden, die eine erhöhte Stabilität der Temperaturregelung ermöglichen. Ferner ist durch die Verwendung von Rückkühlern mit erhöhter Kühlleistung ein erweiterter Taupunkteinstellbereich möglich, wobei es bevorzugt ist, im Rückkühler einen langen Gasweg zu verwenden, um eine verbesserte Durchflußunabhängigkeit der erzeugten Feuchtwerte zu erhalten. Eine verlängerte Lebensdauer des Rückkühlers kann ferner erreicht werden, wenn derselbe als Edelstahlrückkühler ausgeführt wird. Die Möglichkeit einer hochflexiblen Feuchteeinstellung und ferner die Möglichkeit der Untersuchung von Proteinkristallen bei erhöhten Temperaturen liefert ein beispielhafter Einstellbereich der Gastemperatur von 5°C bis 60°C und ein beispielhafter Einstellbereich des Gastaupunktes von 1°C bis 60°C.

Die erfindungsgemäße Vorrichtung eignet sich insbesondere zur Anwendung auf dem Gebiet der Proteinkristallographie. Es ist bekannt, daß sich durch Kristallschrumpfung die Kristallordnung bei Proteinkristallen verbessern läßt, wobei dieser Prozeß direkt über den Wassergehalt im Kristall gesteuert werden kann. Wie oben ausgeführt wurde, kann dieser Wassergehalt durch die vorliegende Erfindung exakt kontrolliert werden. Vorzugsweise sind dabei der Steuerrechner 10 sowie die Steuerelektronik 12 ausgelegt, um vorbestimmte Feuchtexperimente durchzuführen. Dabei kann die erfindungsgemäße Vorrichtung vorzugsweise Einrichtungen aufweisen, die es ermöglichen, verschiedene Parameter, wie Startwertfeuchte, Endwertfeuchte und Feuchtegradient, gezielt einzustellen. Ferner kann die vorliegende Erfindung Einrichtungen aufweisen, die es ermöglichen, während derartiger Feuchtexperimente die Änderung der kristallinen Ordnung im Röntgenstrahl zu verfolgen.

Ein beispielhaftes Feuchtexperiment, das durch die erfindungsgemäße Vorrichtung zur Erzeugung einer definierten Umgebung für partikelförmige Proben durchgeführt werden kann, besteht beispielsweise darin, zunächst einen Proteinkristall in seinem nativen Zustand zu montieren und dann zur Charakterisierung des Kristallsystems eine Feuchterampe zu durchlaufen. Als Startfeuchte kann dabei die relative Feuchte des nativen Zustands gewählt werden, während als Endfeuchte ein Feuchtewert verwendet wird, der der Startfeuchte minus 20% entspricht. Die Änderung der Feuchte kann beispielsweise in Schritten von jeweils 0,25% erfolgen, so daß sich bei einer Feuchtedifferenz von 20% achzig Feuchtniveaus ergeben. Als Verweildauer auf einem jeweiligen Niveau kann eine Zeit von 30 Sekunden implementiert werden, so daß die Gesamtdauer eines solchen Feuchtexperiments 50 Minuten betragen würde. Die Reaktion des Kristalls auf die Feuchteänderung kann kontinuierlich mit Röntgenaufnahmen festgehalten werden.

**Patentansprüche**

1.  Vorrichtung zur Erzeugung einer definierten Umgebung für partikelförmige Proben mit folgenden Merkmalen:

     einem Halteelement (22) mit einem Auflageende für eine partikelförmige Probe;

     einer Vorrichtung zum Erzeugen eines feuchten Gasstroms an einem Mündungsende (30) derselben, wobei das Mündungsende (30) auf das Auflageende gerichtet ist,

     wobei die Vorrichtung zum Erzeugen des feuchten Gasstroms folgende Merkmale aufweist:

eine Einrichtung (44; 90 - 98) zum Bereitstellen eines Gases, das eine erste Temperatur und eine erste relative Feuchte aufweist, so daß das Gas eine erste Taupunkttemperatur besitzt;

einen Kühler (46) zum Abkühlen des Gases auf eine Kühlertemperatur unter Kondensation von Feuchtigkeit, um eine zweite Taupunkttemperatur des Gases, die der Kühlertemperatur entspricht, einzustellen;

eine Einrichtung (24, 28; 36) zum Leiten des Gases mit der zweiten Taupunkttemperatur zu dem Mündungsende (30) unter Verhinderung einer Kondensation von Feuchtigkeit aus dem Gas; und

eine Einrichtung zum Einstellen der relativen Feuchte des Gases an dem Mündungsende (30) durch Einstellen der Kühlertemperatur und Einstellen der Temperatur des Gases an dem Mündungsende.

2. Vorrichtung gemäß Anspruch 1, bei der die Einrichtung zum Leiten des Gases eine Fluidleitung (28) und einen Meßkopf (16), der das Mündungsende (30) aufweist, aufweist, wobei ferner Einrichtungen zum Halten der Temperatur der Fluidleitung (28; 36) und des Meßkopfes 16) auf einer Temperatur, die die zweite Taupunkttemperatur nicht unterschreitet, vorgesehen sind.

3. Vorrichtung gemäß Anspruch 1 oder 2, die eine Einrichtung (10) zum Ermitteln einer einzustellenden zweiten Taupunkttemperatur auf der Grundlage einer gewünschten relativen Feuchte des Gases an dem Mündungsende (30) und einer Temperatur, auf die das Gas an dem Mündungsende (30) eingestellt wird, aufweist.

4. Vorrichtung gemäß Anspruch 3, bei der die Einrichtung zum Einstellen der Temperatur die Kühlertemperatur auf die ermittelte zweite Taupunkttemperatur einstellt und die Temperatur des Gases am Mündungsende (30) auf einen konstanten Wert einstellt.

5. Vorrichtung gemäß Anspruch 1 oder 2, die ferner eine Einrichtung zur Berücksichtigung eines Druckunterschieds zwischen einem Druck im Kühler (46) und einem Druck am Mündungsende (30) beim Einstellen der relativen Feuchte am Mündungsende (30) aufweist.

6. Vorrichtung gemäß Anspruch 5, die ferner eine Einrichtung zum Ermitteln des Druckunterschieds basierend auf einem erfaßten Druck in dem Kühler (46) und einem erfaßten Absolutdruck am Mündungsende (30) oder basierend auf einem erfassten Druck in dem Kühler (46) und einem typischen Umgebungsdruck aufweist.

7. Vorrichtung gemäß Anspruch 6, die ferner eine Einrichtung zum Ermitteln einer einzustellenden zweiten Taupunkttemperatur auf der Grundlage einer gewünschten relativen Feuchte des Gases an dem Mündungsende (30) und einer Temperatur, auf die das Gas an dem Mündungsende (30) eingestellt wird, aufweist, die folgende Merkmale aufweist:

eine Einrichtung zum Ermitteln einer an dem Mündungsende erforderlichen Taupunkttemperatur des Gases auf der Grundlage der gewünschten relativen Feuchte und der Temperatur des Gases am Mündungsende (30);

eine Einrichtung zum Ermitteln eines erforderlichen Wasserdampfpartialdrucks des Gases am Mündungsende (30) aus der Temperatur des Gases am Mündungsende (30) und der erforderlichen Taupunkttemperatur des Gases am Mündungsende;

eine Einrichtung zum Ermitteln eines im Kühler (46) erforderlichen Wasserdampfpartialdruckes basierend auf dem erforderlichen Wasserdampfpartialdruck des Gases am Mündungsende (30) und dem Druckunterschied; und

eine Einrichtung zum Ermitteln der einzustellenenden zweiten Taupunkttemperatur des Gases basierend auf dem ermittelten erforderlichen Wasserpartialdruck im Kühler (46).

8. Vorrichtung gemäß einem der Ansprüche 1 bis 7, bei der die Einrichtung (48) zum Einstellen der Kühlertemperatur und der Temperatur des Gases am Mündungsende (30) ausgebildet ist, um die Temperaturen derart einzustellen, daß vorbestimmte Verläufe der Feuchte des Gasstroms eingestellt werden.

9. Vorrichtung gemäß einem der Ansprüche 1 bis 8, die ferner eine Einrichtung (70, 72, MFC) zum Zuführen eines oder mehrerer Fremdgase in den feuchten Gasstrom aufweist.

**10.** Vorrichtung gemäß einem der Ansprüche 1 bis 9, die ferner einen Direktverdampfer (82) zum Zuführen einer verdampften Flüssigkeit zu dem feuchten Gasstrom aufweist.

**11.** Vorrichtung gemäß Anspruch 8 oder 9, die ferner eine Einrichtung zum Berücksichtigen der Änderung des Taupunkts des feuchten Gasstroms durch das Zuführen des einen oder der mehreren Fremdgase und/oder das Zuführen der verdampften Flüssigkeit beim Einstellen der relativen Feuchte am Mündungsende (30) aufweist.

**12.** Vorrichtung gemäß einem der Ansprüche 1 bis 11, bei der die Einrichtung zum Einstellen der Temperatur am Mündungsende (30) eine Einrichtung zum Einstellen der Temperatur eines Probenkopfs (16), der das Mündungsende (30) aufweist, aufweist.

**13.** Verfahren zur Erzeugung einer definierten Umgebung für partikelförmige Proben mit folgenden Schritten:

Halten einer partikelförmigen Probe an einem Auflageende eines Halteelements (22);

Erzeugen eines feuchten Gasstroms (26) an einem Mündungsende (30), das auf das Auflageende gerichtet ist, mit folgenden Teilschritten:

Bereitstellen eines Gases, das eine erste Temperatur und eine erste relative Feuchte aufweist, so daß das Gas eine erste Taupunkttemperatur besitzt;

Abkühlen des Gases auf eine Kühlertemperatur unter Kondensation von Feuchtigkeit, um eine zweite Taupunkttemperatur des Gases, die der Kühlertemperatur entspricht, einzustellen;

Leiten des Gases mit der zweiten Taupunkttemperatur zu dem Mündungsende (30), wobei verhindert wird, daß Feuchtigkeit aus dem Gas kondensiert; und

Einstellen der Kühlertemperatur und der Temperatur des Gases an dem Mündungsende (30) zum Einstellen der relativen Feuchte des Gases an dem Mündungsende.

**14.** Verfahren gemäß Anspruch 13, das ferner den Schritt des Haltens des Gases mit der zweiten Taupunkttemperatur nach dem Abkühlen desselben auf die Kühlertemperatur auf einer Temperatur, die die zweite Taupunkttemperatur nicht unterschreitet, aufweist.

**15.** Verfahren gemäß Anspruch 13 oder 14, das ferner einen Schritt des Ermittelns einer einzustellenden zweiten Taupunkttemperatur auf der Grundlage einer gewünschten relativen Feuchte des Gases an dem Mündungsende (30) und einer Temperatur, auf die das Gas an dem Mündungsende (30) eingestellt wird, aufweist.

**16.** Verfahren gemäß Anspruch 15, bei dem beim Schritt des Einstellens der Temperatur die Kühlertemperatur auf die ermittelte zweite Taupunkttemperatur eingestellt wird und die Temperatur des Gases am Mündungsende (30) auf einen konstanten Wert eingestellt wird.

**17.** Verfahren gemäß Anspruch 11 oder 12, das ferner einen Schritt des Berücksichtigens eines Druckunterschieds zwischen einem Druck, der beim Kühlen des Gases auf die Kühlertemperatur vorliegt, und einem Druck am Mündungsende (30) beim Einstellen der relativen Feuchte aufweist.

**18.** Verfahren gemäß Anspruch 17, bei dem der Schritt des Berücksichtigens eines Druckunterschieds einen Schritt des Ermittelns des Druckunterschieds basierend auf einem erfaßten Druck in einem Kühler (46), in dem das Gas auf die zweite Taupunkttemperatur gekühlt wird, und einem erfaßten Absolutdruck am Mündungsende (30) oder basierend auf dem erfassten Druck in dem Kühler (46) und einem typischen Umgebungsdruck aufweist.

**19.** Verfahren gemäß Anspruch 18, das ferner einen Schritt des Ermittelns einer einzustellenden zweiten Taupunkttemperatur auf der Grundlage einer gewünschten relativen Feuchte des Gases an dem Mündungsende (30) und einer Temperatur, auf die das Gas an dem Mündungsende (30) eingestellt wird, aufweist, der folgende Teilschritte umfaßt:

Ermitteln einer an dem Mündungsende erforderlichen Taupunkttemperatur des Gases auf der Grundlage der gewünschten relativen Feuchte und der Temperatur des Gases am Mündungsende (30);

Ermitteln eines erforderlichen Wasserdampfpartialdrucks des Gases am Mündungsende (30) aus der Temperatur des Gases am Mündungsende (30) und der erforderlichen Taupunkttemperatur des Gases am Mündungsende;

Ermitteln eines im Kühler (46) erforderlichen Wasserdampfpartialdruckes basierend auf dem erforderlichen Wasserdampfpartialdruck des Gases am Mündungsende (30) und dem Druckunterschied; und

Ermitteln der einzustellenden zweiten Taupunkttemperatur des Gases basierend auf dem ermittelten erforderlichen Wasserpartialdruck im Kühler (46).

20. Verfahren gemäß einem der Ansprüche 13 bis 19, bei dem im Schritt des Einstellens der Kühlertemperatur und der Temperatur des Gases am Mündungsende (30) dieselben derart eingestellt werden, daß vorbestimmte Verläufe der Feuchte des Gasstroms (26) eingestellt werden.

21. Verfahren gemäß einem der Ansprüche 13 bis 20, das ferner einen Schritt des Zuführens eines oder mehrerer Fremdgase zu dem feuchten Gasstrom (26) aufweist.

22. Verfahren gemäß einem der Ansprüche 13 bis 21, das ferner einen Schritt des Zuführens einer mittels eines Direktverdampfers verdampften Flüssigkeit zu dem feuchten Gasstrom aufweist.

23. Verfahren gemäß Anspruch 21 oder 22, das ferner einen Schritt des Berücksichtigens der Änderung des Taupunkts des feuchten Gasstroms durch das Zuführen des einen oder der mehreren Fremdgase und/oder das Zuführen der verdampften Flüssigkeit beim Einstellen der relativen Feuchte des Gases am Mündungsende aufweist.

24. Verfahren gemäß einem der Ansprüche 13 bis 23, bei dem der Schritt des Einstellens der Gastemperatur am Mündungsende einen Schritt des Einstellens der Temperatur eines Probenkopfs (16), der das Mündungsende (30) aufweist, aufweist.

**Claims**

1. Apparatus for generating a defined environment for particle-shaped samples, comprising:

   a support element (22) having a rest end for a particle-shaped sample;

   an apparatus for generating a humid gas flow at a mouth end (30) thereof, wherein the mouth end (30) is directed to the rest end,

   wherein the apparatus for generating the humid gas flow comprises:

   means (44; 90 - 98) for providing gas having a first temperature and a first relative humidity, so that the gas has a first dew-point temperature;

   a cooler (46) for cooling the gas to a cooler temperature under condensation of moisture to adjust a second dew-point temperature of the gas corresponding to the cooler temperature;

   means (24, 28; 36) for guiding the gas with the second dew-point temperature to the mouth end (30), preventing condensation of moisture from the gas; and

   means for adjusting the relative humidity of the gas at the mouth end (30) by adjusting the cooler temperature and adjusting the temperature of the gas at the mouth end.

2. Apparatus of claim 1, wherein the means for guiding the gas comprises a fluid conduit (28) and a measuring head (16) having the mouth end (30), wherein further means for holding the temperature of the fluid conduit (28; 36) and the measuring head (16) at a temperature not falling below the second dew-point temperature are provided.

3. Apparatus of claim 1 or 2, comprising means (10) for determining a second dew-point temperature to be adjusted on the basis of a desired relative humidity of the gas at the mouth end (30) and a temperature to which the gas at the mouth end (30) is adjusted.

4. Apparatus of claim 3, wherein the means for adjusting the temperature adjusts the cooler temperature to the determined second dew-point temperature and adjusts the temperature of the gas at the mouth end (30) to a constant value.

5. Apparatus of claim 1 or 2, further comprising means for taking into account a pressure difference between a pressure in the cooler (46) and a pressure at the mouth end (30) in adjusting the relative humidity at the mouth end (30).

6. Apparatus of claim 5, further comprising means for determining the pressure difference based on a detected pressure in the cooler (46) and a detected absolute pressure at the mouth end (30) or based on a detected pressure in the cooler (46) and a typical ambient pressure.

7. Apparatus of claim 6, further comprising means for determining a second dew-point temperature to be adjusted on the basis of a desired relative humidity of the gas at the mouth end (30) and a temperature to which the gas at the mouth end (30) is adjusted, comprising:

   means for determining a dew-point temperature of the gas required at the mouth end on the basis of the desired relative humidity and the temperature of the gas at the mouth end (30);

   means for determining a required water vapor partial pressure of the gas at the mouth end (30) from the temperature of the gas at the mouth end (30) and the required dew-point temperature of the gas at the mouth end;

   means for determining a water vapor partial pressure required in the cooler (46) based on the required water vapor partial pressure of the gas at the mouth end (30) and the pressure difference; and

   means for determining the second dew-point temperature of the gas to be adjusted based on the determined required water partial pressure in the cooler (46).

8. Apparatus of one of claims 1 to 7, wherein the means (48) for adjusting the cooler temperature and the temperature of the gas at the mouth end (30) is formed to adjust the temperatures such that predetermined courses of the humidity of the gas flow are adjusted.

9. Apparatus of one of claims 1 to 8, further comprising means (70, 72, MFC) for feeding one or more foreign gases to the humid gas flow.

10. Apparatus of one of claims 1 to 9, further comprising a direct vaporizer (82) for feeding a vaporized liquid to the humid gas flow.

11. Apparatus of claim 8 or 9, further comprising means for taking into account the change of the dew-point of the humid gas flow by the feeding of the one or more foreign gases and/or the feeding of the vaporized liquid in the adjusting of the relative humidity at the mouth end (30).

12. Apparatus of one of claims 1 to 11, wherein the means for adjusting the temperature at the mouth end (30) comprises means for adjusting the temperature of a sample head (16) comprising the mouth end (30).

13. Method for generating a defined environment for particle-shaped samples, comprising:

   supporting a particle-shaped sample at a rest end of a support element (22);

   generating a humid gas flow (26) at a mouth end (30) directed to the rest end, comprising the following sub-steps:

      providing gas having a first temperature and a first relative humidity, so that the gas has a first dew-point temperature;

      cooling the gas to a cooler temperature under condensation of moisture in order to adjust a second dew-point temperature of the gas corresponding to the cooler temperature;

guiding the gas with the second dew-point temperature to the mouth end (30), preventing moisture to condense from the gas; and

adjusting the cooler temperature and the temperature of the gas at the mouth end (30) for adjusting the relative humidity of the gas at the mouth end.

14. Method of claim 13, further comprising the step of holding the gas with the second dew-point temperature after the cooling thereof to the cooler temperature at a temperature not falling below the second dew-point temperature.

15. Method of claim 13 or 14, further comprising a step of determining a second dew-point temperature to be adjusted on the basis of a desired relative humidity of the gas at the mouth end (30) and a temperature to which the gas at the mouth end (30) is adjusted.

16. Method of claim 15, wherein in the step of adjusting the temperature the cooler temperature is adjusted to the determined second dew-point temperature and the temperature of the gas at the mouth end (30) is adjusted to a constant value.

17. Method of claim 11 or 12, further comprising a step of taking into account a pressure difference between a pressure present when cooling the gas to the cooler temperature and a pressure at the mouth end (30) when adjusting the relative humidity.

18. Method of claim 17, wherein the step of taking into account a pressure difference comprises a step of determining the pressure difference based on a detected pressure in a cooler (46) in which the gas is cooled to the second dew-point temperature and a detected absolute pressure at the mouth end (30) or based on the detected pressure in the cooler (46) and a typical ambient pressure.

19. Method of claim 18, further comprising a step of determining a second dew-point temperature to be adjusted on the basis of a desired relative humidity of the gas at the mouth end (30) and a temperature to which the gas is adjusted at the mouth end, including the following sub-steps:

determining a dew-point temperature of the gas required at the mouth end on the basis of the desired relative humidity and the temperature of the gas at the mouth end (30);

determining a required water vapor partial pressure of the gas at the mouth end (30) from the temperature of the gas at the mouth end (30) and the required dew-point temperature of the gas at the mouth end;

determining a water vapor partial pressure required in the cooler (46) based on the required water vapor partial pressure of the gas at the mouth end (30) and the pressure difference; and

determining the second dew-point temperature of the gas to be adjusted based on the determined required water partial pressure in the cooler (46).

20. Method of one of claims 13 to 19, wherein in the step of adjusting the cooler temperature and the temperature of the gas at the mouth end (30) same are adjusted such that predetermined courses of the humidity of the gas flow (26) are adjusted.

21. Method of one of claims 13 to 20, further comprising a step of feeding one or more foreign gases to the humid gas flow (26).

22. Method of one of claims 13 to 21, further comprising a step of feeding a liquid vaporized by means of a direct vaporizer to the humid gas flow.

23. Method of claim 21 or 22, further comprising a step of taking into account the change of the dew-point of the humid gas flow by the feeding of the one or more foreign gases and/or the feeding of the vaporized liquid in adjusting the relative humidity of the gas at the mouth end.

**24.** Method of one of claims 13 to 23, wherein the step of adjusting the gas temperature at the mouth end comprises a step of adjusting the temperature of a sample head (16) comprising the mouth end (30).

**Revendications**

**1.** Dispositif de production d'un environnement défini pour des échantillons sous forme de particules, aux caractéristiques suivantes :

un élément de retenue (22) avec une extrémité d'appui pour un échantillon sous forme de particules ;
un dispositif destiné à produire un flux de gaz humide à une extrémité débouchante (30) de ce dernier, l'extrémité débouchante (30) étant orientée vers l'extrémité d'appui,
le dispositif destiné à produire le flux de gaz humide présentant les caractéristiques suivantes :

un dispositif (44 ; 90 à 98) destiné à préparer un gaz présentant une première température et une première humidité relative, de sorte que le gaz possède une première température de point de rosée ;

un refroidisseur (46) destiné à refroidir le gaz à une température de refroidisseur avec condensation de l'humidité, pour régler une deuxième température de point de rosée du gaz qui correspond à la température de refroidisseur ;

un dispositif (24, 28 ; 36) destiné à conduire le gaz à la deuxième température de point de rosée vers l'extrémité débouchante (30) tout en empêchant une condensation de l'humidité du gaz ; et

un dispositif destiné à régler l'humidité relative du gaz à l'extrémité débouchante (30) en réglant la température de refroidisseur et en réglant la température du gaz à l'extrémité débouchante.

**2.** Dispositif selon la revendication 1, dans lequel le dispositif destiné à conduire le gaz présente une conduite à fluide (28) et une tête de mesure (16) qui présente l'extrémité débouchante (30), par ailleurs étant prévus des dispositifs destinés à maintenir la température de la conduite à fluide (28 ; 36) et de la tête de mesure (16) à une température qui ne descend pas au-dessous de la deuxième température de point de rosée.

**3.** Dispositif selon la revendication 1 ou 2, présentant un dispositif (10) destiné à déterminer une deuxième température de point de rosée à régler sur la base d'une humidité relative désirée du gaz à l'extrémité débouchante (30) et d'une température à laquelle est réglé le gaz à l'extrémité débouchante (30).

**4.** Dispositif selon la revendication 3, dans lequel le dispositif destiné à régler la température de refroidisseur règle la température de refroidisseur à la deuxième température de point de rosée déterminée et règle la température du gaz à l'extrémité débouchante (30) à une valeur constante.

**5.** Dispositif selon la revendication 1 ou 2, présentant, par ailleurs, un dispositif destiné à tenir compte d'une différence de pression entre une pression dans le refroidisseur (46) et une pression à l'extrémité débouchante (30) lors du réglage de l'humidité relative à l'extrémité débouchante (30).

**6.** Dispositif selon la revendication 5, présentant, par ailleurs, un dispositif destiné à déterminer la différence de pression sur base d'une pression détectée dans le refroidisseur (46) et d'une pression absolue détectée à l'extrémité débouchante (30) ou sur base d'une pression détectée dans le refroidisseur (46) et d'une pression ambiante typique.

**7.** Dispositif selon la revendication 6, présentant, par ailleurs, un dispositif destiné à déterminer une deuxième température à régler sur base d'une humidité relative désirée du gaz à l'extrémité débouchante (30) et d'une température à laquelle est réglé le gaz à l'extrémité débouchante (30), présentant les caractéristiques suivantes :

un dispositif destiné à déterminer une température de point de rosée du gaz requise à l'extrémité débouchante sur base de l'humidité relative désirée et de la température du gaz à l'extrémité débouchante (30) ;

un dispositif destiné à déterminer une pression partielle de vapeur d'eau requise du gaz à l'extrémité débouchante (30) à partir de la température du gaz à l'extrémité débouchante (30) et de la température de point de rosée requise du gaz à l'extrémité débouchante;

un dispositif destiné à déterminer une pression partielle de vapeur d'eau requise dans le refroidisseur (46) sur base de la pression partielle de vapeur d'eau requise du gaz à l'extrémité débouchante (30) et de la différence de pression ; et

un dispositif destiné à déterminer la deuxième température de point de rosée à régler du gaz sur base de la pression partielle d'eau requise dans le refroidisseur (46).

8. Dispositif selon l'une des revendications 1 à 7, dans lequel le dispositif (48) destiné à régler la température de refroidisseur et la température du gaz à l'extrémité débouchante (30) est réalisé pour régler les températures de sorte que soient réglées des évolutions prédéterminées de l'humidité du flux de gaz.

9. Dispositif selon l'une des revendications 1 à 8, présentant, par ailleurs, un dispositif (70, 72, MFC) destiné à alimenter un ou plusieurs gaz étrangers vers le flux de gaz humide.

10. Dispositif selon l'une des revendications 1 à 9, présentant, par ailleurs, un vaporisateur direct (82) destiné à alimenter un liquide évaporé vers le flux de gaz humide.

11. Dispositif selon la revendication 8 ou 9, présentant, par ailleurs, un mécanisme destiné à tenir compte de la modification du point de rosée du flux de gaz humide en alimentant un ou plusieurs gaz étrangers et/ou en alimentant le liquide évaporé lors du réglage de l'humidité relative à l'extrémité débouchante (30).

12. Dispositif selon l'une des revendications 1 à 11, dans lequel le dispositif destiné à régler la température à l'extrémité débouchante (30) présente un dispositif destiné à régler la température d'une tête à échantillon (16) présentant l'extrémité débouchante (30).

13. Procédé pour produire un environnement défini pour des échantillons sous forme de particules, aux étapes suivantes consistant à :

maintenir un échantillon sous forme de particules à une extrémité d'appui d'un élément de retenue (22) ;
générer un flux de gaz humide (26) à une extrémité débouchante (30) orienté vers l'extrémité d'appui, aux étapes partielles suivantes consistant à :

préparer un gaz présentant une première température et une première humidité relative, de sorte que le gaz possède une première température de point de rosée ;
refroidir le gaz à une température de refroidisseur avec condensation de l'humidité, pour régler une deuxième température de point de rosée du gaz qui correspond à la température de refroidisseur ;
conduire le gaz à la deuxième température de point de rosée vers l'extrémité débouchante (30), où il est évité que l'humidité du gaz ne se condense ; et
régler la température de refroidisseur et la température du gaz à l'extrémité débouchante (30), pour régler l'humidité relative du gaz à l'extrémité débouchante.

14. Procédé selon la revendication 13, présentant, par ailleurs, l'étape consistant à maintenir le gaz à la deuxième température de point de rosée après le refroidissement de celui-ci à la température de refroidisseur à une température qui ne descend pas au-dessous de la deuxième température de point de rosée.

15. Procédé selon la revendication 13 ou 14, présentant, par ailleurs, une étape consistant à déterminer une deuxième température de point de rosée à régler sur base d'une humidité relative désirée du gaz à l'extrémité débouchante (30) et d'une température à laquelle est réglé le gaz à l'extrémité débouchante (30).

16. Procédé selon la revendication 15, dans lequel, à l'étape de réglage de la température, la température de refroidisseur est réglée à la deuxième température de point de rosée déterminée et la température du gaz à l'extrémité débouchante (30) est réglée à une valeur constante.

17. Procédé selon la revendication 11 ou 12, présentant, par ailleurs, une étape consistant à tenir compte d'une différence de pression entre une pression qui est présente, lors du refroidissement du gaz, à la température de refroidisseur, et une pression à l'extrémité débouchante (30) lors du réglage de l'humidité relative.

**18.** Procédé selon la revendication 17, dans lequel l'étape consistant à tenir compte d'une différence de pression présente une étape consistant à déterminer la différence de pression sur base d'une pression détectée dans un refroidisseur (46) dans lequel le gaz est refroidi à la deuxième température de point de rosée, et une pression absolue détectée à l'extrémité débouchante ou sur base de la pression détectée dans le refroidisseur (46) et d'une pression ambiante typique (30).

**19.** Procédé selon la revendication 18, présentant, par ailleurs, une étape consistant à déterminer une deuxième température de point de rosée à régler sur base d'une humidité relative désirée du gaz à l'extrémité débouchante (30) et d'une température à laquelle est réglé le gaz à l'extrémité débouchante (30), comprenant les étapes partielles suivantes :

déterminer une température de point de rosée du gaz requise à l'extrémité débouchante sur base de l'humidité relative désirée et de la température du gaz à l'extrémité débouchante (30) ;
déterminer une pression partielle de vapeur d'eau du gaz requise à l'extrémité débouchante (30) à partir de la température du gaz à l'extrémité débouchante (30) et de la température de point de rosée du gaz requise à l'extrémité débouchante ;
déterminer une pression partielle de vapeur d'eau requise dans le refroidisseur (46) sur base de la pression partielle de vapeur d'eau du gaz requise à l'extrémité débouchante (30) et de la différence de pression ; et
déterminer la deuxième température de point de rosée du gaz à régler sur base de la pression partielle d'eau requise déterminée dans le refroidisseur (46).

**20.** Procédé selon l'une des revendications 13 à 19, dans lequel, à l'étape de réglage de la température de refroidisseur et de la température du gaz à l'extrémité débouchante (30), celles-ci sont réglées de sorte que soient réglées des évolutions prédéterminées de l'humidité du flux de gaz (26).

**21.** Procédé selon l'une des revendications 13 à 20, présentant, par ailleurs, une étape consistant à alimenter un ou plusieurs gaz étrangers vers le flux de gaz humide (26).

**22.** Procédé selon l'une des revendications 13 à 21, présentant, en outre, une étape consistant à alimenter un liquide évaporé au moyen d'un vaporisateur direct vers le flux de gaz humide.

**23.** Procédé selon la revendication 21 ou 22, présentant, par ailleurs, une étape consistant à tenir compte de la variation du point de rosée du flux de gaz humide en alimentant l'un ou les plusieurs gaz étrangers et/ou en alimentant le liquide évaporé lors du réglage de l'humidité relative du gaz à l'extrémité débouchante.

**24.** Procédé selon l'une des revendications 13 à 23, dans lequel l'étape de réglage de la température de gaz à l'extrémité débouchante présente une étape consistant à régler la température d'une tête à échantillon (16) présentant l'extrémité débouchante (30).

Fig. 1

Fig. 2

50 Preßluft

Kondensat 52

44

46

48

34

36 Meßgas

54

38 Vakuum

40 Temperierfluid

58 56

Temperierfluid

42

30

Tp

16

EP 1 502 099 B1

EP 1 502 099 B1

Preßluft

MFC

50

Kondensat

52

Fremdgas 1   70   MFC

Fremdgas 2   MFC

72

80

Flüssigkeit

68   MFC

82

84

44

48

T

46

54

58   56

64

36

Meßgas

38   Vakuum

40   Temperierfluid

42   Temperierfluid

Tp

30

16

Fig. 3

Fig. 4

EP 1 502 099 B1